# EUROPEAN PATENT APPLICATION

(11) **EP 4 668 388 A1**
(43) Date of publication of application: **24.12.2025**
(21) Application number: 25150296.9
(22) Date of filing: 06.01.2025
(51) Int. Cl.: H01M 10/04, H01M 50/152, H01M 50/213, H01M 50/342, H01M 50/531, H01M 50/578, H01M 50/242

(54) **SECONDARY BATTERY AND BATTERY PACK INCLUDING THE SAME**

(30) Priority: 18.06.2024 KR 20240079082
(71) Applicant: SAMSUNG SDI CO., LTD., Yongin-si, Gyeonggi-do 17084 (KR)
(72) Inventor: KIM, Dae Kyu, 16678 Suwon-si (KR); SEO, Kwang Soo, 16678 Suwon-si (KR); PARK, Jong Jun, 16678 Suwon-si (KR)
(74) Representative: Marks & Clerk LLP

(57) **Abstract**

A secondary battery includes a case having an opening, an electrode assembly in the case, and a cap assembly configured to seal the opening of the case, the cap assembly including a cap-up exposed to an outside of the case, a vent plate between the cap-up and the electrode assembly, the vent plate being electrically connected to the cap-up, a cap-down between the vent plate and the electrode assembly, the cap-down being electrically connected to the vent plate and the electrode assembly, a first insulator between the vent plate and the electrode assembly, and a second insulator between the vent plate and the electrode assembly, the second insulator being spaced apart from the first insulator and being configured to support the vent plate.

## Description

### BACKGROUND

### 1. Field

The present disclosure relates to a secondary battery and a battery pack including the same.

### 2. Description of the Related Art

In general, with the recent rapid spread of electronic devices using batteries, such as mobile phones, notebook computers, and electric vehicles, the demand for secondary batteries having high energy density and high capacity is rapidly increased. Accordingly, research and development to improve the performance of lithium secondary batteries are being actively conducted.

The lithium secondary batteries are batteries including a positive electrode and a negative electrode, each of which includes an active material capable of intercalation and deintercalation of lithium ions, and an electrolyte, and generate electric energy through an oxidation-reduction reaction occurring when lithium ions are intercalated/deintercalated into/from the positive electrode and the negative electrode.

The above information disclosed in this Background section is provided for enhancement of understanding of the background of the present disclosure, and, therefore, it may contain information that does not constitute related (or prior) art.

### SUMMARY

The present invention is directed to providing a secondary battery capable of improving a structural strength of internal components of the secondary battery, and a battery pack including the same.

The present invention is also directed to providing a secondary battery capable of reducing the amount of deformation of a vent plate, and a battery pack including the same.

These and other aspects and features of the present disclosure will be described in or will be apparent from the following description of some embodiments of the present disclosure.

According to an aspect of embodiments, there is provided a secondary battery including a case having an opening, an electrode assembly accommodated in the case, and a cap assembly configured to seal the opening, wherein the cap assembly includes a cap-up disposed to be exposed to the outside of the case, a vent plate disposed between the cap-up and the electrode assembly and electrically connected to the cap-up, a cap-down disposed between the vent plate and the electrode assembly and electrically connected to the vent plate and the electrode assembly, a first insulator disposed between the vent plate and the electrode assembly, and a second insulator disposed between the vent plate and the electrode assembly, disposed to be spaced apart from the first insulator, and configured to support the vent plate.

The second insulator may be disposed closer to a center of the case than the first insulator is.

The first insulator and the second insulator may be disposed at different distances from the electrode assembly.

The first insulator and the second insulator may each be provided in a circular shape.

The cap assembly may include a bridge configured to connect the first insulator and the second insulator and support the vent plate.

The bridge may include a step part in which a step is formed, and the first insulator and the second insulator may be disposed at different distances from the electrode assembly.

One end of the bridge may be provided to have a width wider than a width of the other end of the bridge.

The one end of the bridge may be connected to the first insulator, and the other end of the bridge may be connected to the second insulator.

The one end of the bridge may be connected to the second insulator, and the other end of the bridge may be connected to the first insulator.

The bridge may include a first bridge and a second bridge connected to the first bridge.

The bridge may be provided in the form of a mesh.

The cap assembly may include a cap-down friction part configured to increase friction between the cap-down and the first insulator.

The cap assembly may include an adhesive disposed on an outer surface of the first insulator or the second insulator.

The first insulator may be formed to have a width narrower than a width of the second insulator.

According to another aspect of embodiments, there is provided a battery pack including a housing, and a plurality of secondary batteries disposed in the housing, wherein each of the secondary batteries includes a case having an opening, an electrode assembly accommodated in the case, and a cap assembly configured to seal the opening, wherein the cap assembly includes a cap-up disposed to be exposed to the outside of the case, a vent plate disposed between the cap-up and the electrode assembly and electrically connected to the cap-up, a cap-down disposed between the vent plate and the electrode assembly and electrically connected to the vent plate and the electrode assembly, a first insulator disposed between the vent plate and the electrode assembly, and a second insulator disposed between the vent plate and the electrode assembly, disposed to be spaced apart from the first insulator, and configured to support the vent plate.

Each secondary battery may be in accordance with the first aspect.

At least some of the above and other features of the invention are set out in the claims.

### BRIEF DESCRIPTION OF THE DRAWINGS

Features will become apparent to those of skill in the art by describing in detail embodiments with reference to the attached drawings in which:
FIG. 1 is a perspective view schematically illustrating a configuration of a battery pack according to various embodiments;
FIG. 2 is a perspective view schematically illustrating a configuration of a secondary battery according to embodiments;
FIG. 3 is an exploded perspective view schematically illustrating a configuration of the secondary battery according to embodiments;
FIG. 4 is an exploded perspective view schematically illustrating a cap assembly of the secondary battery according to embodiments;
FIG. 5 is a cross-sectional view schematically illustrating a configuration of the secondary battery according to embodiments;
FIG. 6 is a perspective view schematically illustrating a state in which an insulator part according to embodiments and a cap down are coupled;
FIG. 7 is a perspective view schematically illustrating a configuration of the insulator part according to embodiments;
FIG. 8 is a plan view schematically illustrating a configuration of the insulator part according to embodiments;
FIG. 9 is a perspective view schematically illustrating a configuration of an insulator part according to other embodiments;
FIG. 10 is a plan view schematically illustrating a configuration of the insulator part according to other embodiments;
FIG. 11 is a plan view schematically illustrating a configuration of an insulator part according to still other embodiments;
FIG. 12 is a plan view schematically illustrating a configuration of an insulator part according to yet other embodiments;
FIG. 13 is a plan view schematically illustrating a configuration of an insulator part according to still other embodiments;
FIG. 14 is a plan view schematically illustrating a configuration of an insulator part according to yet other embodiments;
FIG. 15 is a plan view schematically illustrating a configuration of an insulator part according to still other embodiments; and
FIG. 16 is a plan view schematically illustrating a configuration of an insulator part according to yet other embodiments.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

It is to be understood that when an element or layer is referred to as being "linked to," "connected to," or "coupled to" another element or layer, it may be directly linked, connected, or coupled to the other element or layer or one or more intervening elements or layers may also be present. When an element or layer is referred to as being "directly linked to," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. In addition, when a part is referred to as being "electrically coupled" to another part, the part may be directly electrically connected to another part or one or more intervening parts may be present therebetween such that the part and the another part are indirectly electrically connected to each other.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

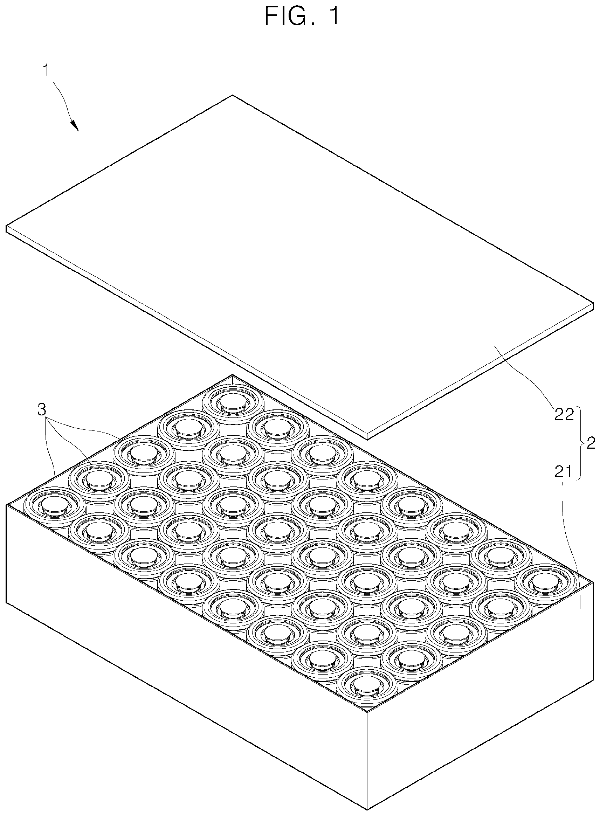

FIG. 1 is a perspective view schematically illustrating a configuration of a battery pack according to various embodiments.

Referring to FIG. 1, a battery pack 1 according to various embodiments may include a housing 2, secondary batteries 3, and bus bars.

The housing 2 may form a schematic exterior of the battery pack 1 and may provide a space in which the secondary batteries 3 may be accommodated. The housing 2 according to the present embodiment may include a housing body 21 and a cover 22.

The housing body 21 may be formed to have the shape of a box with a hollow interior and an open side. For example, as illustrated in FIG. 1, a cross-sectional shape of the housing body 21 may be quadrangular. In another example, a cross-sectional shape of the housing body 21 may be changed in design to have various shapes, e.g., a polygonal shape, a circular shape, and an oval shape.

The cover 22 may be coupled to the housing body 21 and may close an internal space of the housing body 21. As an example, the cover 22 may be formed to have a plate shape and may be disposed to face the open side of the housing body 21. The cover 22 may be fixed to the housing body 21 by various types of coupling methods such as bolting, welding, and fitting coupling.

The secondary battery 3 may function as a unit structure, which stores and supplies power, in the battery pack 1. A plurality of secondary batteries 3 may be provided. The plurality of secondary batteries 3 may be disposed in the housing 2 to form various patterns, such as a grid shape and a zigzag shape. The plurality of secondary batteries 3 may be disposed side by side. The number of the secondary batteries 3 may be varied in design depending on the size and shape of the housing 2 or the like. A detailed configuration of each of the secondary batteries will be described later.

The bus bars may electrically connect the plurality of secondary batteries 3. The plurality of secondary batteries 3 may be connected in series or parallel by the bus bars. As an example, in the housing 2, the bus bars may connect the secondary batteries 3 disposed in the same row in parallel and connect the secondary batteries 3 disposed in two adjacent rows in series. The bus bar may be formed of an electrically conductive material such as copper, aluminum, or nickel.

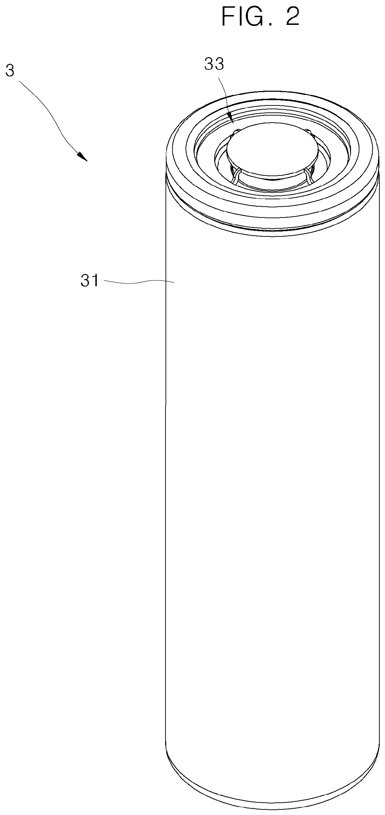

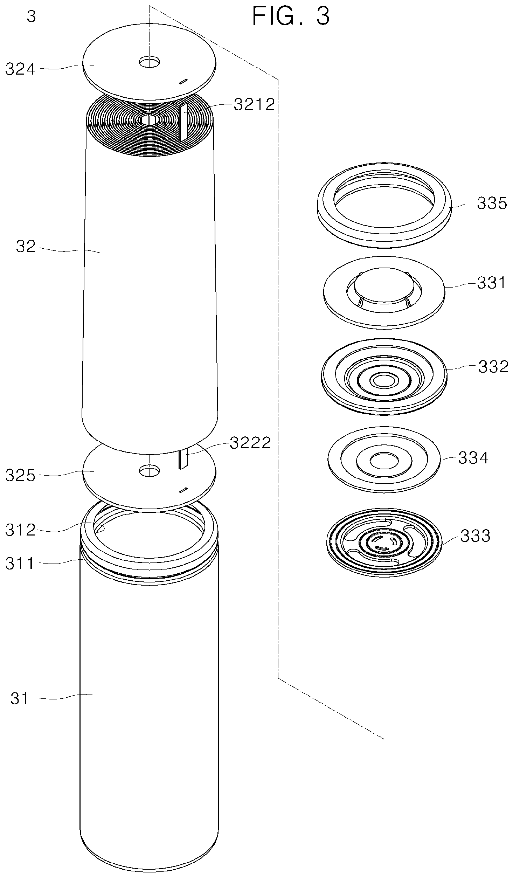

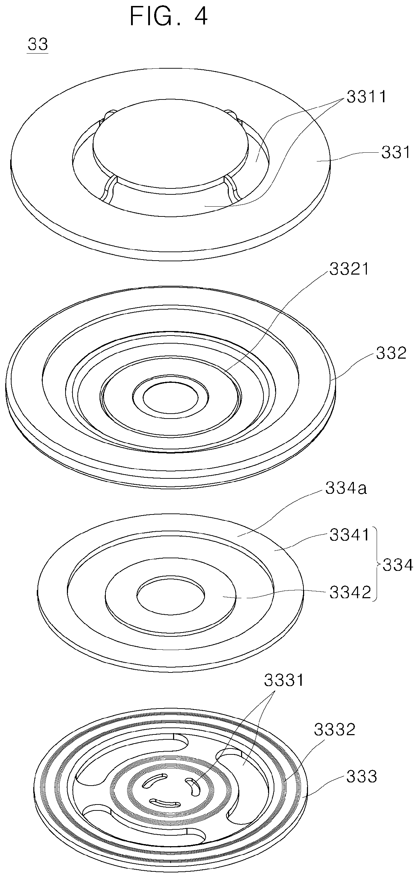

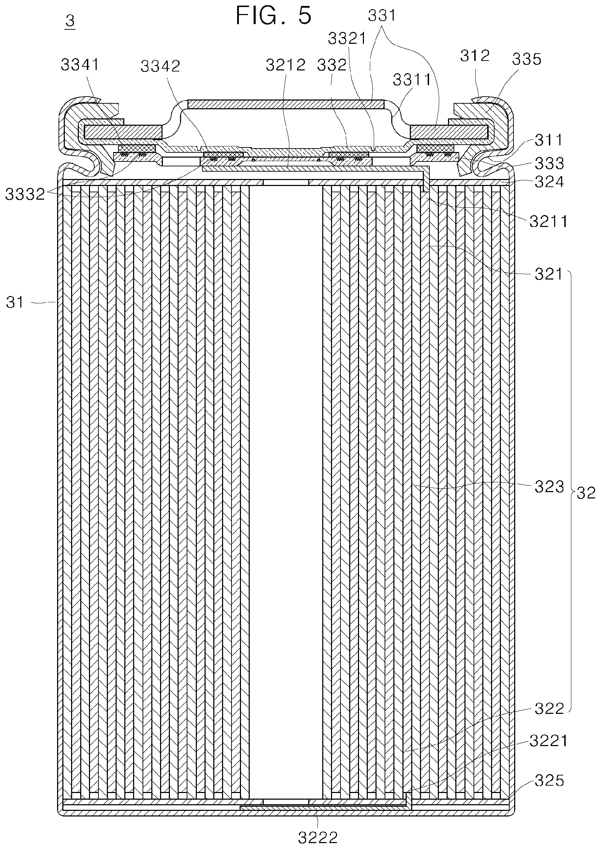

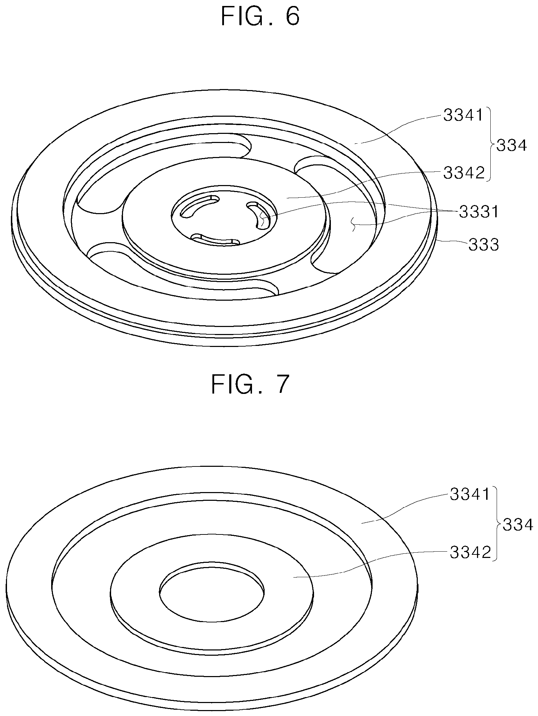

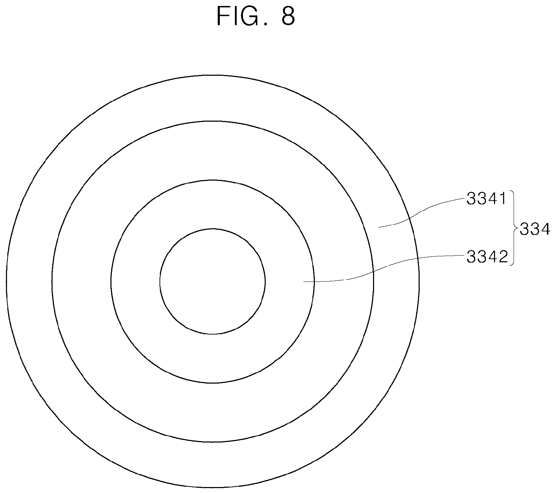

FIG. 2 is a perspective view schematically illustrating a configuration of the secondary battery 3, FIG. 3 is an exploded perspective view schematically illustrating a configuration of the secondary battery 3, and FIG. 4 is an exploded perspective view schematically illustrating a cap assembly of the secondary battery 3. FIG. 5 is a cross-sectional view schematically illustrating a configuration of the secondary battery 3, FIG. 6 is a perspective view schematically illustrating a state in which an insulator part according to embodiments and a cap down are coupled, FIG. 7 is a perspective view schematically illustrating a configuration of the insulator part according to embodiments, and FIG. 8 is a plan view schematically illustrating a configuration of the insulator part according to embodiments.

The secondary battery 3 shown in FIGS. 2 to 8 is the same as the secondary battery 3 shown in FIG. 1. Accordingly, a description of the same component will be omitted.

Referring to FIGS. 2 to 8, the secondary battery 3 according to the present embodiment may include a case 31, an electrode assembly 32, and a cap assembly 33.

Hereinafter, a case in which the secondary battery 3 is a lithium-ion secondary battery having a cylindrical shape will be described as an example. However, the secondary battery 3 may be any suitable battery, e.g., a lithium-polymer battery or a prismatic battery.

The case 31 forming a cylindrical shape of the secondary battery 3 may be provided in various shapes. For example, as illustrated in FIG. 2, the case 31 may be provided in a cylindrical shape. In another example, the case 31 may be provided in any suitable shape, e.g., a prismatic shape including a polygonal base.

The case 31 may include an opening on one side, and the electrode assembly 32 may be accommodated inside the case 31 through the opening. The case 31 is formed of a conductive material, e.g., aluminum, and may protect the electrode assembly 32 from external impact and function as a heat sink to dissipate heat associated with charging and discharging operations of the electrode assembly 32 to the outside. In addition, referring to FIG. 3, a bottom surface of the case 31 may be electrically connected to a second electrode tab 3222 by welding or the like, so that the case 31 may function as a second electrode.

Referring to FIG. 3, the electrode assembly 32 may be disposed in the case 31. The electrode assembly 32 may function as a unit structure for performing charging and discharging operations of power in the secondary battery 3. Referring to FIG. 5, the electrode assembly 32 may include a first electrode plate 321, a second electrode plate 322, and a separator 323 disposed between the first electrode plate 321 and the second electrode plate 322.

The electrode assembly 32 may have a shape that is wound around a winding axis. In detail, the electrode assembly 32 may have a shape in which the first electrode plate 321, the separator 323, and the second electrode plate 322 are stacked and wound in a clockwise or counterclockwise direction around the winding axis. Accordingly, the electrode assembly 32 may have a shape roughly similar to a jelly roll. A cross-sectional shape of the electrode assembly 32 may be changed in design into various shapes such as an elliptical shape, a polygonal shape, or the like in addition to a circular shape. Here, the winding axis may refer to a straight line passing through a central portion of the electrode assembly 32.

The first electrode plate 321 may function as a positive electrode of the electrode assembly 32. The first electrode plate 321 may be formed in the form of a foil including a metal material, e.g., aluminum or an aluminum alloy. Any suitable type, size, and shape of the first electrode plate 321 may be implemented as long as the first electrode plate 321 has conductivity and does not cause chemical changes in the secondary battery.

A first active material layer may be applied to at least a portion of the first electrode plate 321. The first active material layer may be applied to both surfaces of the first electrode plate 321, or alternatively, the first active material layer may be applied to only one surface of the first electrode plate 321.

As the first electrode plate 321 functions as a positive electrode, the first active material layer may include a positive electrode active material. The positive electrode active material may include a compound (lithiated intercalation compound) capable of reversible intercalation and deintercalation of lithium. In detail, the positive electrode active material may include one or more types of composite oxides of lithium and a metal selected from cobalt, manganese, nickel, iron, and a combination thereof.

For example, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNixCo_{y}Mn_{z}O₂, NCM). Here, conditions of 0<x<1, 0<y<1, 0<z<1, and x+y+z=1 may be satisfied. The positive electrode active material may include only one of LiFePO₄, LiMnFePO₄, and LiNiₓCo_{y}Mn_{z}O₂, and may also include two or all of LiFePO₄, LiMnFePO₄, and LiNiₓCo_{y}Mn_{z}O₂.

The first active material layer may further include a positive electrode conductive material. The positive electrode conductive material is used to impart conductivity to the first active material layer, and any electrically conductive material that does not cause a chemical change in the battery may be used. Examples of the positive electrode conductive material may include a carbon material such as natural graphite, artificial graphite, carbon black, acetylene black, ketjen black, carbon fibers, carbon nanofibers, carbon nanotubes, and the like; a metal material in the form of metal powder or metal fibers including copper, nickel, aluminum, silver, and the like; a conductive polymer such as a polyphenylene derivative; or a mixture thereof.

The first active material layer may further include a positive electrode binder. The positive electrode binder serves to adhere particles constituting the positive electrode active material to each other well, and to adhere the positive electrode active material to the first electrode plate 321 well. Examples of the positive electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the positive electrode binder, a cellulose compound capable of imparting viscosity may be further included. As the cellulose compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, e.g., polytetrafluoroethylene, polyvinylidene fluoride, a polyvinylidene fluoride-hexafluoropropylene copolymer, a polyethylene oxide, or a combination thereof.

The first electrode plate 321 may include a first uncoated portion 3211 on which the first active material layer is not applied. The first uncoated portion 3211 may protrude a predetermined distance from one end portion of the electrode assembly 32 along the winding axis.

The second electrode plate 322 may function as a negative electrode of the electrode assembly 32. The second electrode plate 322 may be formed in the form of a foil including a metal material, e.g., copper, a copper alloy, nickel, or a nickel alloy. The second electrode plate 322 may be disposed to be spaced apart from the first electrode plate 321 by a predetermined interval to face the first electrode plate 321. Any suitable type, size, and shape of the second electrode plate 322 may be implemented as long as the second electrode plate 322 has conductivity and does not cause chemical changes in the secondary battery.

A second active material layer may be applied to at least a portion of the second electrode plate 322. The second active material layer may be applied to both surfaces of the second electrode plate 322, or alternatively, the second active material layer may be applied to only one surface of the second electrode plate 322.

As the second electrode plate 322 functions as a negative electrode, the second active material layer may include a negative electrode active material. The negative electrode active material may be a material that reversibly intercalates/deintercalates lithium ions, a lithium metal, a lithium metal alloy, a material capable of doping and dedoping lithium, or a transition metal oxide.

The material capable of reversible intercalation and deintercalation of lithium ions is a carbon negative electrode active material, and may include, e.g., crystalline carbon, amorphous carbon, or a combination thereof. Examples of the crystalline carbon may include graphite such as amorphous, plate-shaped, flake-shaped, spherical-shaped or fiber-shaped natural graphite or artificial graphite. Examples of the amorphous carbon may include soft carbon or hard carbon, a mesophase pitch carbide, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si negative electrode active material or a Sn negative electrode active material may be used as the material capable of doping and dedoping lithium. The Si negative electrode active material may include silicon, a silicon-carbon composite, SiOₓ (x = 1 or 2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn negative electrode active material may include Sn, SnO₂, a Sn alloy, or a combination thereof.

The silicon-carbon composite may be a composite of silicon and amorphous carbon. According to an embodiment, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, e.g., the silicon primary particles are coated with amorphous carbon. The secondary particles may be dispersed in an amorphous carbon matrix. The silicon-carbon composite may further include crystalline carbon. For example, the silicon-carbon composite may include a core including crystalline carbon and silicon particles and an amorphous carbon coating layer located on the surface of the core.

The Si negative electrode active material or the Sn negative electrode active material may be used by being mixed with a carbon negative electrode active material.

The second active material layer may further include a negative electrode conductive material and a negative electrode binder.

The negative electrode conductive material is used to impart conductivity to the second active material layer, and any electrically conductive material that does not cause a chemical change in the battery may be used. Examples of the negative electrode conductive material may include a carbon material such as natural graphite, artificial graphite, carbon black, acetylene black, ketjen black, carbon fibers, carbon nanofibers, carbon nanotubes, and the like; a metal material in the form of metal powder or metal fibers including copper, nickel, aluminum, silver, and the like; a conductive polymer such as a polyphenylene derivative; or a mixture thereof.

The negative electrode binder serves to adhere particles constituting the negative electrode active material to each other well, and to adhere the negative electrode active material to the second electrode plate 322 well. Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose compound capable of imparting viscosity may be further included. As the cellulose compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, e.g., polytetrafluoroethylene, polyvinylidene fluoride, a polyvinylidene fluoride-hexafluoropropylene copolymer, a polyethylene oxide, or a combination thereof.

The second electrode plate 322 may include a second uncoated portion 3221 on which the second active material layer is not applied. The second uncoated portion 3221 may protrude a predetermined distance from the other end portion of the electrode assembly 32 located on an opposite side of the first uncoated portion 3211 along the winding axis.

A first electrode tab 3212 may be electrically connected to the first electrode plate 321, and the second electrode tab 3222 may be electrically connected to the second electrode plate 322. One end, e.g. a first end, of the first electrode tab 3212 may be connected to the first uncoated portion 3211 by welding or the like, and the other end, e.g. a second end, of the first electrode tab 3212 may be electrically connected to a cap-up 331. In addition, one end, e.g. a first end, of the second electrode tab 3222 may be connected to the second uncoated portion 3221 by welding or the like, and the other end, e.g. a second end, of the second electrode tab 3222 may be welded to the bottom surface of the case 31.

For example, the first electrode tab 3212 may be directly connected to the first electrode plate 321. In another example, the first electrode tab 3212 may be (e.g., indirectly) connected to the first electrode plate 321 through a first current collector plate disposed between the electrode assembly 32 and a first insulating plate 324.

For example, the second electrode tab 3222 may be directly connected to the second electrode plate 322. In another example, the second electrode tab 3222 may be (e.g., indirectly) connected to the second electrode plate 322 by a second current collector plate disposed between the electrode assembly 32 and a second insulating plate 325.

The separator 323 may be disposed between the first electrode plate 321 and the second electrode plate 322. The separator 323 may prevent a short circuit between the first electrode plate 321 and the second electrode plate 322 while allowing the movement of lithium ions between the first electrode plate 321 and the second electrode plate 322.

The separator 323 may be made of polyethylene, polypropylene, polyvinylidene fluoride, or a multilayer film of two or more layers thereof, and may also be made of a mixed multilayer film, such as a polyethylene/polypropylene double-layered separator, a polyethylene/polypropylene/polyethylene three-layered separator, and a polypropylene/polyethylene/polypropylene three-layered separator. The separator 323 may include a porous substrate, and a coating layer including an organic material, an inorganic material, or a combination thereof located on one surface or opposite surfaces of the porous substrate.

The porous substrate may be a polymer film formed of a polymer, or a copolymer or mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, Teflon, and polytetrafluoroethylene.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y2O₃, SrTiO₃, BaTiO₃, Mg(OH)₂, boehmite, and a combination thereof.

The organic and inorganic materials may be present by being mixed in one coating layer or may be present in the form in which a coating layer including organic materials and a coating layer including inorganic materials are stacked.

A pair of separators 323 may be provided. The pair of separators 323 may be disposed to face both surfaces of the first electrode plate 321 or the second electrode plate 322, respectively. The pair of separators 323 may be wound around the winding axis together with the first electrode plate 321 and the second electrode plate 322.

The first insulating plate 324 and the second insulating plate 325 may be disposed on one end portion and the other end portion of the electrode assembly 32, respectively, in the case 31. The first insulating plate 324 may be disposed between the cap assembly 33 and an upper surface of the electrode assembly 32 to insulate between the electrode assembly 32 and the cap assembly 33, and the second insulating plate 325 may be disposed between the electrode assembly 32 and the bottom surface of the case 31 to insulate between the electrode assembly 32 and the case 31.

The cap assembly 33 may block a current when a pressure inside the case 31 increases. The cap assembly 33 may rupture due to an increase in pressure inside the case 31, causing the inside and outside of the case 31 to be in communication. As the inside and outside of the case 31 are in communication, the pressure inside the case 31 may decrease, thereby reducing the risk of explosion of the secondary battery 3.

The cap assembly 33 may be coupled to the case 31 to seal the opening of the case 31. In detail, a beading part 311 may be formed to be concave inward in the case 31, and a crimping part 312 is formed by bending a portion of the case 31 inward at an upper portion of the cap assembly 33, thereby allowing the cap assembly 33 to be coupled to the case 31. The beading part 311 and the crimping part 312 may firmly fix the cap assembly 33 to the case 31 and support the cap assembly 33, thereby preventing the cap assembly 33 from separating and also preventing an electrolyte from leaking to the outside.

Referring to FIGS. 4-5, the cap assembly 33 may include the cap-up 331, a vent plate 332, a cap-down 333, an insulator part 334, and a gasket 335.

The cap-up 331 may be electrically connected to the electrode assembly 32. According to an embodiment, the cap-up 331 may be electrically connected to the first electrode plate 321 to function as a positive electrode. The cap-up 331 may be disposed to protrude outside the case 31.

The cap assembly 33 may include a cap-up hole 3311 that passes through the cap-up 331. Substances, e.g., gases, generated inside the case 31 may be discharged to the outside of the case 31 through the cap-up hole 3311.

The vent plate 332 may be disposed between the cap-up 331 and the electrode assembly 32. According to an embodiment, the vent plate 332 may be disposed below the cap-up 331. The vent plate 332 may be electrically connected to the cap-up 331. Aportion of the cap-up 331 may be surrounded by the vent plate 332. According to an embodiment, both surfaces of an end portion of the cap-up 331 may be surrounded by the vent plate 332 and in contact with the vent plate 332. Accordingly, the cap-up 331 may be fixed to the vent plate 332. The cap-up 331 may thus be electrically connected to the electrode assembly 32 via the vent plate 332.

The vent plate 332 may move as the pressure inside the case 31 increases. According to an embodiment, when the pressure inside the case 31 increases, the vent plate 332 may move closer to the cap-up 331. As the vent plate 332 moves closer to the cap-up 331, the volume inside the case 31 may increase and the pressure inside the case 31 may decrease.

As the vent plate 332 moves, the vent plate 332 may be electrically disconnected from the cap-down 333 and/or the electrode assembly 32. As described above, as the pressure inside the case 31 increases, the vent plate 332 moves and the electrical connection between the vent plate 332 and the electrode assembly 32 is cut off, thereby preventing a sudden explosion of the secondary battery 3.

The vent plate 332 may include a vent plate notch 3321. The vent plate notch 3321 may be provided as a concavely formed groove (e.g., a groove hollowed into the vent plate 332 from a surface of the vent plate 332 facing the cap-up 331). As the vent plate notch 3321 is formed in the vent plate 332, the vent plate notch 3321 can rupture earlier than other portions of the vent plate 332 by an external force. As the vent plate notch 3321 ruptures earlier than other portions of the vent plate 332, the inside and outside of the case 31 may be in communication with each other (e.g., through the ruptured vent plate notch 3321 and the cap-up hole 3311 that are in fluid communication with each other). The ruptured portion of the vent plate notch 3321 and the cap-up hole 3311 may reduce the pressure inside the secondary battery 3, and may prevent the secondary battery 3 from exploding.

By including the vent plate 332, the cap assembly 33 may release gas to the outside when the pressure inside the case 31 exceeds a certain pressure, and may prevent the secondary battery 3 from exploding.

The cap-down 333 may be disposed between the vent plate 332 and the electrode assembly 32. According to an embodiment, the cap-down 333 may be disposed below the vent plate 332.

The cap-down 333 may be electrically connected to the vent plate 332 and the electrode assembly 32. The cap-down 333 may support the vent plate 332 to prevent deformation of the vent plate 332.

The cap assembly 33 may include a cap-down hole 3331 that passes through the cap-down 333. The cap-down hole 3331 may allow both surfaces of the cap-down 333 (e.g., opposite surfaces parallel to the second insulating plate 325) to be in communication. As the cap-down hole 3331 is disposed at both surfaces of the cap-down 333, gas generated from the electrode assembly 32 inside the case 31 may move through the cap-down hole 3331. Accordingly, when the pressure inside the case 31 increases, the increased pressure may act on the vent plate 332.

A plurality of cap-down holes 3331 may be provided. According to an embodiment, the cap-down hole 3331 may have any suitable shape. For example, referring to FIG. 4, the cap-down hole 3331 may be shaped in the form of a long hole (e.g., extending circumferentially).

The cap-down hole 3331 may be disposed between a first insulator 3341 and a second insulator 3342 (e.g., vertically overlapping a region between the first insulator 3341 and the second insulator 3342), which will be described below. The cap-down hole 3331 may be disposed on an inner side of the second insulator 3342.

The cap assembly 33 may include a cap-down friction part 3332 disposed on the cap-down 333. The cap-down friction part 3332 may be disposed on an upper portion of the cap-down 333 (e.g., on a surface of the cap-down 333 facing the insulator part 334). The cap-down friction part 3332 may be provided in a concavo-convex shape to increase friction. The cap-down friction part 3332 may be in contact (e.g., direct contact) with the insulator part 334 to prevent the insulator part 334 from moving from the cap-down 333.

The cap-down friction part 3332 may be disposed at various positions on the cap-down 333. According to an embodiment, the cap-down friction part 3332 may be disposed on the cap-down 333 so as to be in contact (e.g., direct contact) with each of the first insulator 3341 and the second insulator 3342.

The insulator part 334 may be disposed between the vent plate 332 and the cap-down 333. The insulator part 334 may include an insulating material and may not conduct electricity.

The insulator part 334 may be disposed between the vent plate 332 and the cap-down 333, and the vent plate 332 and the cap-down 333 may not conduct electricity through the insulator part 334. Accordingly, the vent plate 332 and the cap-down 333 may be electrically connected to each other only through direct contact therebetween.

The insulator part 334 may include, e.g., polypropylene (PP), polybutylene terephthalate (PBT), polyethylene (PE), and a fluoropolymer, and the like. The insulator part 334 may be manufactured by injection molding. Accordingly, the insulator part 334 may be integrally formed.

The vent plate 332 may be disposed above the insulator part 334, and the cap-down 333 may be disposed below the insulator part 334. As the insulator part 334 is disposed between the vent plate 332 and the cap-down 333, the insulator part 334 may support the vent plate 332. As the insulator part 334 supports the vent plate 332, the deformation of the vent plate 332 may be prevented.

The insulator part 334 may include the first insulator 3341 and the second insulator 3342. For example, referring to FIG. 4, the first insulator 3341 and the second insulator 3342 may each be provided in a circular shape (e.g., as viewed in a top view). In another example, each of the first insulator 3341 and the second insulator 3342 may be provided in various shapes, e.g., a triangular shape, a rectangular shape, and the like.

Each of the first insulator 3341 and the second insulator 3342 may be provided as a single integrated piece. Metal may be disposed inside each of the first insulator 3341 and the second insulator 3342 (e.g., the metal may be completely coated and covered with the insulating material of the insulator part 334). As metal is disposed inside each of the first insulator 3341 and the second insulator 3342, the rigidity of the first insulator 3341 and the second insulator 3342 may be increased. The metal disposed inside each of the first insulator 3341 and the second insulator 3342 may be various metals, e.g., stainless steel, aluminum, and the like.

The first insulator 3341 and the second insulator 3342 may be disposed to be spaced apart from each other. For example, referring to FIG. 4, the first insulator 3341 and the second insulator 3342 may be concentric circles radially spaced apart from each other, e.g., the first insulator 3341 may have a larger radius than that of the second insulator 3342 and may completely surround a perimeter of the second insulator 3342.

For example, referring to FIG. 5, the first insulator 3341 and the second insulator 3342 may be disposed at different heights from the electrode assembly 32 (e.g., relative to an upper surface of the first insulating plate 324). That is, the first insulator 3341 and the second insulator 3342 may be disposed on different planes.

In another example, the first insulator 3341 and the second insulator 3342 may be disposed at the same height from the electrode assembly 32 (e.g., relative to the upper surface of the first insulating plate 324). That is, the first insulator 3341 and the second insulator 3342 may be disposed on the same plane (e.g., lower surfaces of the first insulator 3341 and the second insulator 3342 may be coplanar).

The second insulator 3342 may be placed closer to the center of the case 31 than the first insulator 3341 is. According to an embodiment, the second insulator 3342 may be disposed radially inward of the first insulator 3341.

The first insulator 3341 may be provided to have a width of approximately 1.0 mm to 2.5 mm. The second insulator 3342 may be provided to have a width of approximately 1.0 mm to 2.5 mm. The width of each of the first and second insulator 3341 and 3342 refers to a radial distance between an inner and an outer diameter of each of the first and second insulator 3341 and 3342.

According to an embodiment, the first insulator 3341 may be formed to have a width narrower than that of the second insulator 3342. For example, the first insulator 3341 may be provided to have a width of approximately 1.7 mm, and the second insulator 3342 may be provided to have a width of approximately 1.8 mm.

As the insulator part 334 includes the first insulator 3341 and the second insulator 3342, and the first insulator 3341 and the second insulator 3342 support the vent plate 332, an amount of deformation occurring in the vent plate 332 due to a force acting from the case 31 may be reduced.

As the first insulator 3341 and the second insulator 3342 are disposed between the vent plate 332 and the cap-down 333 to reduce the amount of deformation of the vent plate 332, there may be less need to consider the amount of deformation of the vent plate 332 in the design of the vent plate 332. Accordingly, the vent plate 332 may have improved precision and reduced design tolerances.

In addition, when the pressure inside the case 31 increases, the vent plate 332 moves toward the cap-up 331 to cut off the electrical connection between the vent plate 332 and the electrode assembly 32, and since the vent plate 332 is supported by the first insulator 3341 and the second insulator 3342, the vent plate 332 may move toward the cap-up 331 under conditions for which the vent plate 332 is designed.

An adhesive 334a may be disposed on the outside of the insulator part 334. As an adhesive is disposed on the outside of the insulator part 334, the insulator part 334 may be attached and fixed to the vent plate 332 and/or the cap-down 333. As described above, as the insulator part 334 is attached and fixed to the vent plate 332 and/or the cap-down 333, the amount of deformation of the vent plate 332 may be reduced.

The gasket 335 may be disposed in a substantially ring shape on a side of the case 31. The gasket 335 may be disposed on an inner side of the case 31.

The gasket 335 may fix the cap assembly 33 according to the shape of the beading part 311 and/or the crimping part 312. According to an embodiment, the gasket 335 may fix the cap-up 331, the vent plate 332, and/or the cap-down 333 of the cap assembly 33. The gasket 335 may insulate the cap-up 331, the vent plate 332, and the cap-down 333 from the case 31.

The gasket 335 may be disposed on an inner surface of the crimping part 312 to surround the vent plate 332, e.g., the gasket 335 may be between an inner surface of the crimping part 312 and the vent plate 332. As the gasket 335 is disposed to surround (e.g., an entire perimeter of) the vent plate 332, the vent plate 332 may be insulated from the case 31. Deformation may occur in the vent plate 332 due to a force transmitted from the vent plate 332 to a lower portion of the secondary battery 3.

The gasket 335 may be disposed on an inner surface of the beading part 311 to be in contact with the cap-down 333, and as the gasket 335 is in contact with the cap-down 333, the cap-down 333 may be insulated from the case 31. The cap-down 333 may be supported by the gasket 335.

The amount of deformation occurring in the vent plate 332 may be reduced by the vent plate 332 and the insulator part 334 since the gasket 335 supports the cap-down 333, the cap-down 333 is in contact with the insulator part 334, and the insulator part 334 disposed between the vent plate 332 and the cap-down 333 supports the vent plate 332.

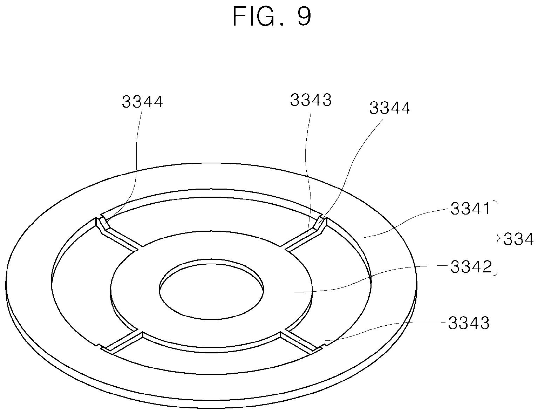

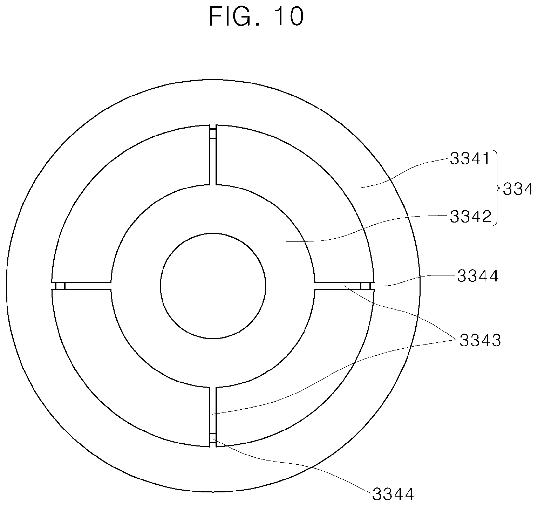

Hereinafter, a secondary battery according to other embodiments will be described with reference to FIGS. 9 and 10. The secondary battery in FIGS. 9 and 10 may be configured to be different from the secondary battery 3 in FIGS. 2-8 only in a configuration of the insulator part.

Accordingly, in describing the secondary battery in FIGS. 9 and 10, only the detailed configuration of the insulator part, which is different from the secondary battery 3 in FIGS. 2-8 will be described. For the remaining components of the secondary battery in FIG. 9, the description of the secondary battery 3 in FIGS. 2-8 may be applied without modification.

FIG. 9 is a perspective view schematically illustrating a configuration of an insulator part according to another embodiment, and FIG. 10 is a plan view schematically illustrating a configuration of the insulator part according to the second embodiments.

Referring to FIGS. 9 and 10, the first insulator 3341 and the second insulator 3342 are the same as in FIGS. 1 to 8. Accordingly, a description of the same component may be omitted.

The cap assembly 33 may further include a bridge 3343. The bridge 3343 may connect the first insulator 3341 and the second insulator 3342, e.g., the bridge 3343 may extend lengthwise in a radial direction with respect to a center of the cap assembly 33. The bridge 3343 may be made of the same material as the first insulator 3341 and the second insulator 3342. The bridge 3343 may be formed integrally with the first insulator 3341 and the second insulator 3342 (e.g., formed simultaneously and of the same material to define a monolithic and seamless single structure).

A width of the bridge 3343 may be approximately 0.3 mm to 2.0 mm (e.g., 1 mm to 2 mm), as measured along a circumferential direction of the insulator part 334. As the bridge 3343 connects the first insulator 3341 and the second insulator 3342 and is disposed between the vent plate 332 and the cap-down 333, the bridge 3343 may support (e.g., and vertically overlap) the vent plate 332 to reduce the amount of change in the vent plate 332.

Referring to FIGS. 9 and 10, a step part 3344 forming a step may be disposed on the bridge 3343. As the step part 3344 is disposed on the bridge 3343, the first insulator 3341 and the second insulator 3342 may be disposed on different planes. For example, referring to FIG. 9, upper surfaces of the bridge 3343 and the second insulator 3342 may be coplanar, and the step part 3344 may be inclined and continuously extend from the bridge 3343 to contact the upper surface of the first insulator 3341. According to an embodiment, distances from the electrode assembly 32 to the first insulator 3341 and the second insulator 3342 may be different (e.g., relative to the upper surface of the first insulating plate 324). The distance from the electrode assembly 32 to the second insulator 3342 may be shorter than the distance from the electrode assembly 32 to the first insulator 3341. The second insulator 3342 may be disposed at a lower position than the first insulator 3341, so the step part 3344 connects the bridge 3343 to the first insulator 3341.

According to another embodiment, the bridge 3343 may not include the step part 3344. Accordingly, the first insulator 3341 and the second insulator 3342 connected by the bridge 3343 may be disposed on the same plane.

A plurality of bridges 3343 may be provided. For example, four bridges 3343 may be provided. The bridges 3343 may be disposed radially from the second insulator 3342 to connect the first insulator 3341 and the second insulator 3342. Intervals between the plurality of bridges 3343 may be the same.

Each of the bridges 3343 may include the step part 3344 that forms a step. As the step part 3344 is disposed on the bridge 3343, both ends of the bridge 3343 may be disposed on different planes. As the first insulator 3341 and the second insulator 3342 are respectively disposed at both ends of the bridge 3343, the first insulator 3341 and the second insulator 3342 may be disposed on different planes.

The position at which the step part 3344 is disposed may vary depending on the design. According to an embodiment, the step part 3344 may be disposed closer to the first insulator 3341 than the second insulator 3342. According to another embodiment, the step part 3344 may be disposed closer to the second insulator 3342 than the first insulator 3341.

A height difference between the first insulator 3341 and the second insulator 3342 caused by the step part 3344 may vary depending on the design. According to an embodiment, the height difference between the first insulator 3341 and the second insulator 3342 may be approximately 0.1 mm to 2.0 mm.

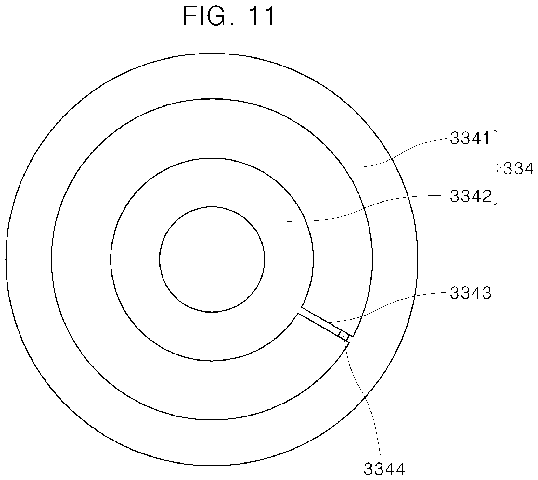

Hereinafter, a secondary battery according to still other embodiments will be described with reference to FIGS. 11-16. The secondary battery in FIGS. 11-16 may be configured to be different from the secondary battery 3 in FIGS. 2-8 only in a detailed configuration of the insulator part.

Accordingly, in describing the secondary battery in FIGS. 11-16 only the detailed configuration of an insulator part, which is different from the secondary battery 3 in FIGS. 2-8, will be described. For the remaining components of the secondary battery in FIGS. 11-16, the description of the secondary battery 3 in FIGS. 2-8 may be applied without modification.

In FIGS. 11 to 16, various embodiments of the shape, number, or arrangement pattern of the bridges of the secondary battery will be illustrated. Various embodiments of the bridge will be described with reference to FIGS. 11 to 16.

FIG. 11 is a plan view schematically illustrating a configuration of an insulator part according to still other embodiments.

Referring to FIG. 11, the first insulator 3341, the second insulator 3342, the bridge 3343, and the step part 3344 shown in FIG. 11 may be the same as those in FIGS. 9 and 10. Accordingly, a description of the same component may be omitted.

The bridge 3343 may be provided as a single bridge. The bridge 3343 may connect the first insulator 3341 and the second insulator 3342. As one bridge 3343 is disposed, the resistance to gas moving through the cap-down hole 3331 of the cap-down 333 toward the vent plate 332 may be reduced.

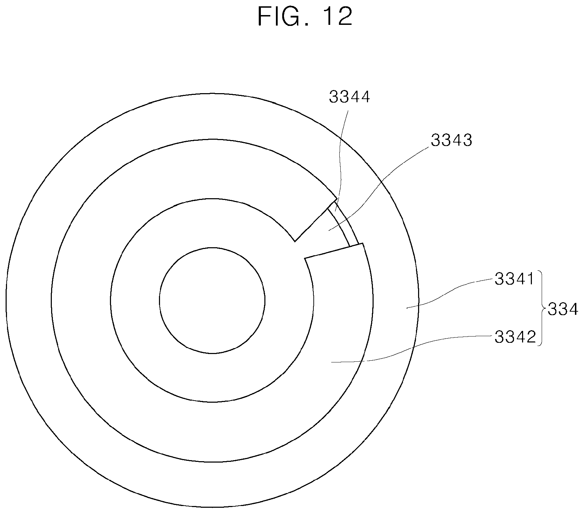

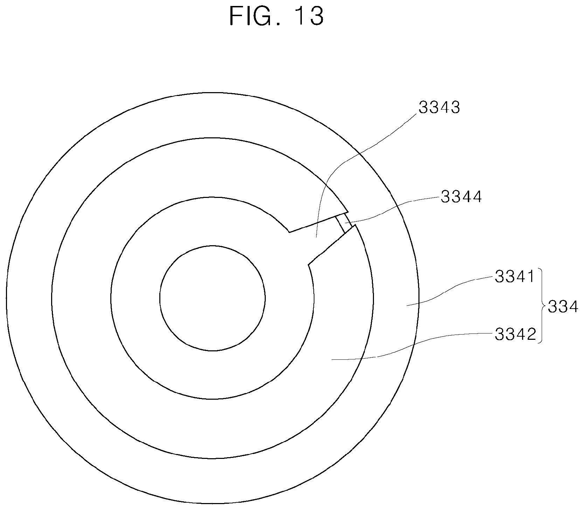

FIG. 12 is a plan view schematically illustrating a configuration of an insulator part according to still other embodiments, and FIG. 13 is a plan view schematically illustrating a configuration of an insulator part according to yet other embodiments.

Referring to FIGS. 12 and 13, the first insulator 3341, the second insulator 3342, the bridge 3343, and the step part 3344 shown in each of FIGS. 12 and 13 may be the same as those in FIGS. 9 and 10. Accordingly, a description of the same component may be omitted.

In the bridge 3343 shown in each of FIGS. 12 and 13, one end may be formed to have a width wider than that of the other end. As the widths of the opposite ends of the bridge 3343 are formed differently, the degree of freedom in the design of the insulator part 334 may be improved.

Referring to FIG. 12, a first end of the bridge 3343 connected to the first insulator 3341 may be formed to have a width wider than that of a second end of the bridge 3343 connected to the second insulator 3342. According to an embodiment, the width of the first end of the bridge 3343 connected to the first insulator 3341 may be greater than or equal to twice the width of the second end of the bridge 3343 connected to the second insulator 3342. According to an embodiment, the width of the first end of the bridge 3343 connected to the first insulator 3341 may be approximately 1.0 mm to 3.0 mm, and the width of the second end of the bridge 3343 connected to the second insulator 3342 may be approximately 0.2 mm to 1.5 mm.

Referring to FIG. 13, a first end of the bridge 3343 connected to the first insulator 3341 may be formed to have a width narrower than that of the second end of the bridge 3343 connected to the second insulator 3342. According to an embodiment, the width of the first end of the bridge 3343 connected to the first insulator 3341 may be less than or equal to half the width of the second end of the bridge 3343 connected to the second insulator 3342. According to an embodiment, the width of first end of the bridge 3343 connected to the first insulator 3341 may be approximately 0.2 mm to 1.5 mm, and the width of the second end of the bridge 3343 connected to the second insulator 3342 may be approximately 1.0 mm to 3.0 mm.

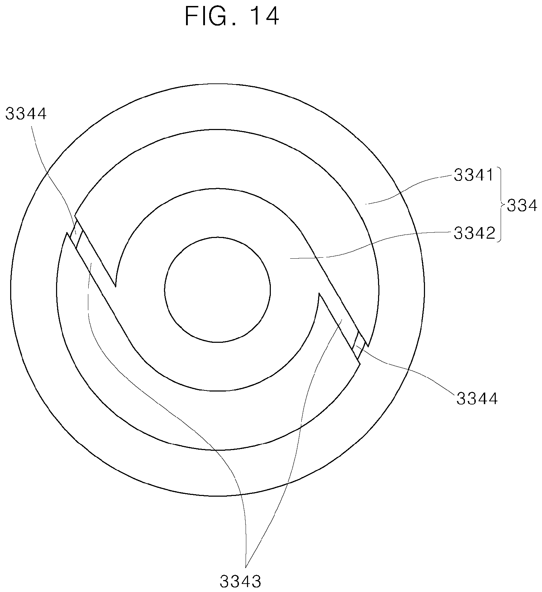

FIG. 14 is a plan view schematically illustrating a configuration of an insulator part according to other embodiments. The first insulator 3341, the second insulator 3342, the bridge 3343, and the step part 3344 shown in FIG. 14 may be the same as those in FIGS. 9 and 10. Accordingly, a description of the same component may be omitted.

Referring to FIG. 14, the bridge 3343 may be disposed in the form that makes contact (e.g., approximate tangential contact) with the second insulator 3342, and may connect the first insulator 3341 and the second insulator 3342. For example, as illustrated in FIG. 14, the bridge 3343 may be inclined at an oblique angle with respect to the radial direction of the insulator part 334, such that the bridge 3343 may define an approximate tangential line extending from an outer circumference of the second insulator 3342 to contact the first insulator 3341. As the bridge 3343 is disposed in the form that makes contact with the second insulator 3342, even when a tensile or compressive force is generated in the bridge 3343, a force may be applied to the second insulator 3342 in a direction in which the second insulator 3342 rotates. Accordingly, the second insulator 3342 may rotate in place without deviating from a designed position thereof. As the second insulator 3342 rotates in place without deviating from the designed position, the second insulator 3342 can support the vent plate 332 at the designed position.

A plurality of bridges 3343 may be provided, e.g., two bridges 3343 may be provided. The two bridges 3343 may be disposed to face each other, e.g., the two bridges 3343 may extend from opposite sides of the second insulator 3342 and may be parallel to each other. In another example, four bridges 3343 may be provided and disposed at equal intervals from each other.

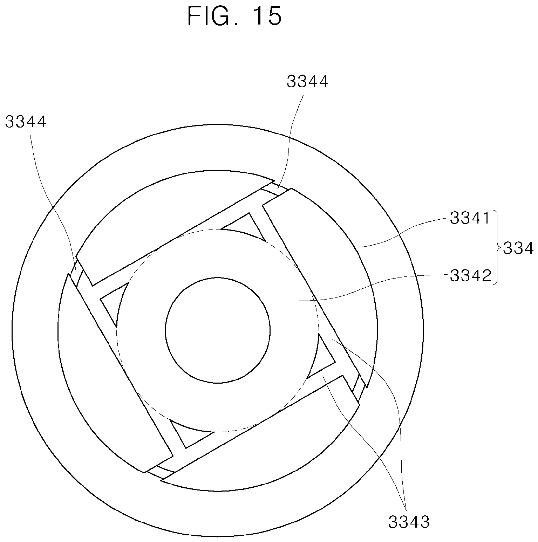

FIG. 15 is a plan view schematically illustrating a configuration of an insulator part according to the seventh embodiments. The first insulator 3341, the second insulator 3342, the bridge 3343, and the step part 3344 shown in FIG. 15 may be the same as those in FIGS. 9 and 10. Accordingly, a description of the same component may be omitted.

Referring to FIG. 15, a plurality of bridges 3343 may be provided. The bridge 3343 may be disposed in the form that makes contact (e.g., tangential contact) with the second insulator 3342, and may be connected to another bridge 3343 (e.g., that also makes tangential contact with the second insulator 3342). The bridge 3343 may connect the first insulator 3341, the second insulator 3342, and another bridge 3343. For example, referring to FIG. 15, two bridges 3343 may extend from different circumferential parts of the second insulator 3342 toward each other and to contact each other (e.g., to be perpendicular to each other), with one of the two bridges 3343 extending beyond the contact point of the two bridges 3343 to further contact the first insulator 3341. For example, referring to FIG. 15, the plurality of bridges 3343 may define a square enclosing the second insulator 3342 (e.g., the second insulator 3342 (indicated with a dashed line) inscribed in a square frame defined by the plurality of bridges 3343), as viewed in a top view

As the bridge 3343 is disposed in the form that makes contact with the second insulator 3342 and is connected to another bridge 3343, even when a tensile or compressive force is generated in the bridge 3343, a force may be applied to the second insulator 3342 in a direction in which the second insulator 3342 rotates. In addition, as a force generated in one bridge 3343 is transmitted to the other bridges 3343, stress is not concentrated on one bridge 3343 but may be distributed to the plurality of bridges 3343. Accordingly, the stability of the bridge 3343 may be improved. Accordingly, the second insulator 3342 may rotate in place without deviating from a designed position thereof. As the second insulator 3342 rotates in place without deviating from the designed position, the second insulator 3342 may support the vent plate 332 at the designed position.

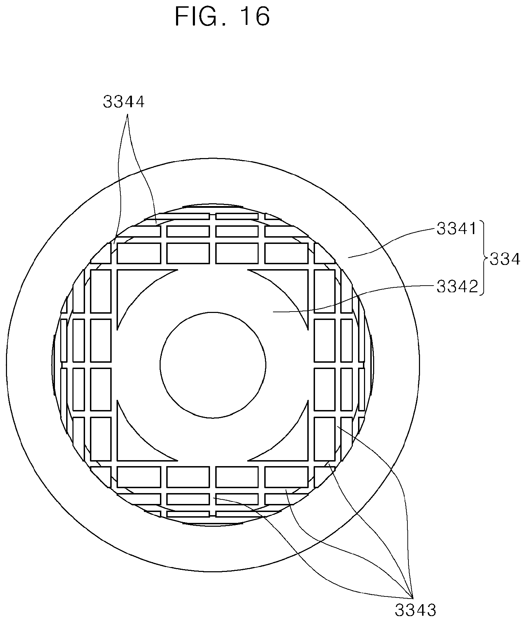

FIG. 16 is a plan view schematically illustrating a configuration of an insulator part according to embodiments. The first insulator 3341, the second insulator 3342, the bridge 3343, and the step part 3344 shown in FIG. 16 may be the same as those in FIGS. 9 and 10. Accordingly, a description of the same component may be omitted.

Referring to FIG. 16, a plurality of bridges 3343 may be provided, e.g., the plurality of bridges 3343 may have a mesh pattern. The bridge 3343 may be connected to the first insulator 3341, the second insulator 3342, and/or at least one other bridge 3343. As the bridge 3343 is disposed to be connected to the first insulator 3341, the second insulator 3342, and/or at least one other bridge 3343, even when a tensile or compressive force is generated in the bridge 3343, since the tensile or compressive force is transferred to at least one other bridge 3343, stress is not concentrated on one bridge 3343 but may be distributed to a plurality of bridges 3343. Accordingly, the stability of the bridge 3343 may be improved. Accordingly, the second insulator 3342 may rotate in place without deviating from a designed position thereof. As the second insulator 3342 rotates in place without deviating from the designed position, the second insulator 3342 may support the vent plate 332 at the designed position.

In a secondary battery and a battery pack including the same according to embodiments, a structural strength of internal components of the secondary battery can be improved. Furthermore, in a secondary battery and a battery pack including the same according to embodiments, the amount of deformation of a vent plate can be reduced.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of embodiments as set forth in the following claims.

## Claims

1. A secondary battery, comprising:
a case having an opening;
an electrode assembly in the case; and
a cap assembly configured to seal the opening of the case, the cap assembly including:
a cap-up exposed to an outside of the case,
a vent plate between the cap-up and the electrode assembly, the vent plate being electrically connected to the cap-up,
a cap-down between the vent plate and the electrode assembly, the cap-down being electrically connected to the vent plate and the electrode assembly,
a first insulator between the vent plate and the electrode assembly, and
a second insulator between the vent plate and the electrode assembly, the second insulator being spaced apart from the first insulator and being configured to support the vent plate.

2. The secondary battery as claimed in claim 1, wherein the second insulator is closer to a center of the case than the first insulator is.

3. The secondary battery as claimed in claim 1 or claim 2, wherein the first insulator and the second insulator are at different distances from the electrode assembly.

4. The secondary battery as claimed in any one of the preceding claims, wherein the first insulator and the second insulator are each provided in a circular shape.

5. The secondary battery as claimed in any one of the preceding claims, wherein the cap assembly further includes a bridge connecting the first insulator and the second insulator, the bridge supporting the vent plate.

6. The secondary battery as claimed in claim 5, wherein:
the bridge includes a step part with a step, and
the first insulator and the second insulator are at different distances from the electrode assembly.

7. The secondary battery as claimed in claim 5 or claim 6, wherein a first end of the bridge is wider than a second end of the bridge.

8. The secondary battery as claimed in claim 7, wherein the first end of the bridge is connected to the first insulator, and the second end of the bridge is connected to the second insulator.

9. The secondary battery as claimed in claim 7, wherein the first end of the bridge is connected to the second insulator, and the second end of the bridge is connected to the first insulator.

10. The secondary battery as claimed in any one of claims 5 to 9, wherein the bridge includes a first bridge and a second bridge connected to the first bridge.

11. The secondary battery as claimed in any one of claims 5 to 9, wherein the bridge has a mesh pattern.

12. The secondary battery as claimed in any one of the preceding claims, wherein the cap assembly further includes a cap-down friction part between the cap-down and the first insulator.

13. The secondary battery as claimed in any one of the preceding claims, wherein the cap assembly further includes an adhesive on an outer surface of the first insulator or the second insulator.

14. The secondary battery as claimed in any one of the preceding claims, wherein the first insulator has a width narrower than a width of the second insulator.

15. A battery pack, comprising:
a housing; and
a plurality of secondary batteries in the housing, each of the plurality of secondary batteries being in accordance with any one of claims 1 to 14.
